# EUROPÄISCHE PATENTSCHRIFT

(11) **EP 1 557 329 B1**
(45) Veröffentlichungstag und Bekanntmachung des Hinweises auf die Patenterteilung: **04.10.2006**
(21) Anmeldenummer: 04026048.1
(22) Anmeldetag: 03.11.2004
(51) Int. Cl.: B60S 9/08

(54) **Höhenverstellbare Stütze für Sattelauflieger oder dergleichen**
Vertically adjustable support for semi-trailer or similar
Support réglable en hauteur pour semi-remorque ou similaire

(30) Priorität: 24.01.2004 DE 202004001054 U
(43) Veröffentlichungstag der Anmeldung: 27.07.2005
(73) Patentinhaber: Georg Fischer Verkehrstechnik GmbH, 78224 Singen (DE)
(72) Erfinder: Riedl, Reinhold, 63897 Miltenberg (DE)
(74) Vertreter: Weiss, Wolfgang

(56) Entgegenhaltungen:
- DE-A1- 19 616 704
- DE-U1- 20 307 381
- FR-A- 1 095 463

## Beschreibung

Die Erfindung bezieht sich auf eine höhenverstellbare Stütze für Sattelauflieger oder dergleichen gemäß dem Oberbegriff des Anspruchs 1. Derartige Stützen sind, in meist paarweiser Anordnung, am vorderen Bereich des Sattelaufliegers angeordnet.

Eine gattungsgemäße Stütze ist aus der DE 203 07 381 U1 bekannt. Dabei ist auf der Getriebeausgangswelle ein Zahnrad drehfest befestigt, welches alternativ über ein Motorantriebsritzel oder ein Handantriebsritzel angetrieben wird.

DE 20 2004 000 592.1 betrifft eine Stütze bei der gemäß der DE 203 07 381 U1 in vorbekannter Weise auch nur ein Zahnrad drehfest auf der Getriebeausgangswelle sitzt, das aber nicht nur alternativ über ein Motorantriebsritzel oder ein Handantriebsritzel angetrieben wird, sondern dass, in anderer Ausgestaltung, über das am Motor sitzende Ritzel auch ein alleiniger Antrieb des Zahnrades vorgesehen ist.

Bei den genannten Getriebeausgestaltungen besteht wegen des Vorhandenseins nur eines Zahnrades, bezüglich der Konstruktionsvariabilität, eine Beschränkung beim Auslegung der Übersetzungen für den Motorantrieb einerseits und den Handantrieb andererseits. Das kann eine Optimierung bei der Motorwahl und der Handantriebsgestaltung vereiteln.

Der Erfindung liegt die Aufgabe zugrunde, eine Stütze für Sattelauflieger mit alternativem Motorantrieb und Handantrieb zu schaffen, wobei die jeweiligen Übersetzungen variabel gestaltungsfähig sind, und so beide Antriebe konstruktiv und kostenmäßig optimal auslegbar sind.

Erfindungsgemäß wird vorgeschlagen auf der Getriebeausgangswelle zwei drehfeste, vorzugsweise unterschiedlich durchmessergroße Zahnräder anzuordnen. Dabei kann eines der Zahnräder, in vorzugsweise permanentem Eingriff des motorgetriebenen Ritzel angetrieben werden. Und in das andere Zahnrad kann ein alternativ einschaltbares Ritzel des Handantriebs eingreifen, um es anzutreiben. Der entsprechende Schaltmechanismus ist vorzugsweise gemäß der DE 203 07 381 U1 gestaltbar. In Abweichung von dieser Ausgestaltung wird jedoch vorgeschlagen das Handantriebsritzel fliegend zu lagern wodurch vorteilhafter Weise eine größtmögliche Freiheit bezüglich der Dimensionierung des Durchmessers des motorangetriebenen Zahnrades besteht. Weil sich erfindungsgemäß jeweils eines der Zahnräder ausschließlich im motorischen Kraftfluss befindet und das andere nur für den Handantriebstrang vorgesehen ist, kann außerdem eine optimale Verzahnungsdimensionierung erfolgen. Wenn nämlich der motorische Betrieb vorzugsweise nur für den leichtgängigen Schnellgang der unbelasteten Stütze vorgesehen ist und für den Lasthub nur der Handantrieb benutzt wird, können die Verzahnung des motorgetriebenen Ritzels und Zahnrades fein sowie schmal sein und nur die Zähne des manuell angetriebenen Ritzels und Zahnrades müssen robuster sein. Das macht die Herstellung kostengünstig.

Vorteilhafte Ausgestaltungen der Erfindung gehen aus den Unteransprüchen hervor.

Die Erfindung wird anschließend anhand der Zeichnungen erläutert. Es zeigen:
- Fig. 1: eine Frontansicht der erfindungsgemäßen Stütze,
- Fig. 2: eine Seitenansicht der in Fig. 1 gezeigten Stütze,
- Fig. 3: einen Längsschnitt der Stütze entlang der Linie A-A in Fig. 1 und
- Fig. 4: einen Teilschnitt/-draufsicht der Stütze entlang der Linie B-B in Fig. 3.

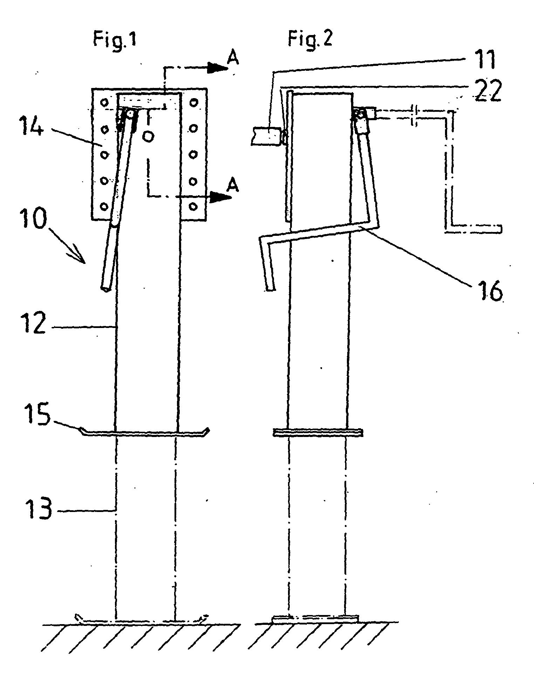

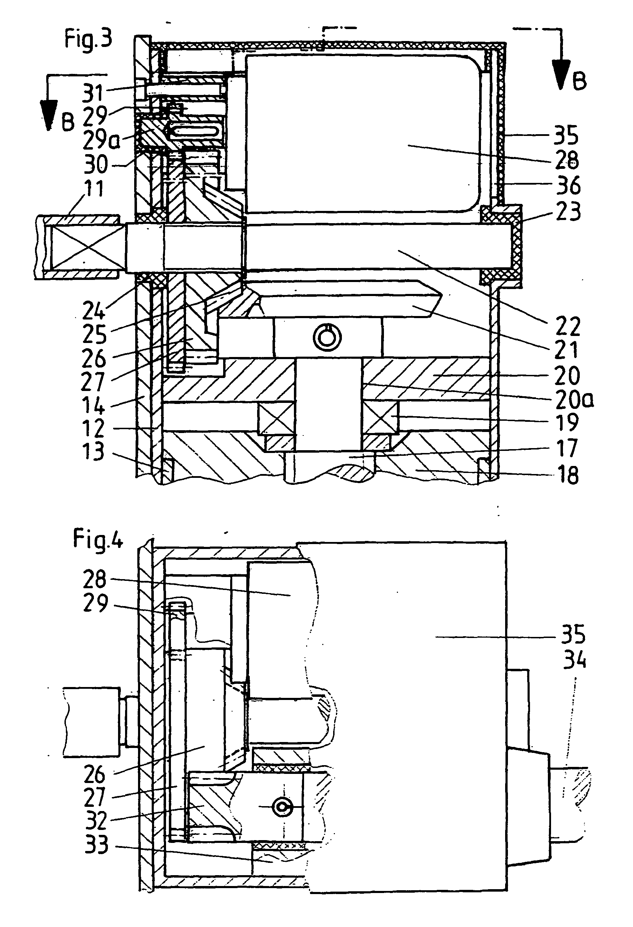

Die in Fig. 1 bis 4 gezeigte Stütze 10 wird paarweise am Chassis eines Sattelaufliegers in dessen vorderen Bereich befestigt und ist in Transportstellung eingefahren, d. h. in verkürztem Zustand. Bevor der Sattelauflieger vom Sattelschlepper abgekuppelt wird, werden die Stützen 10 ausgefahren.

Da die Stützen 10 eines jeden Paares im Aufbau annähernd gleich sind bzw. weil die meistens von einer ersten Stütze 10 aus über eine Verbindungswelle 11 mitangetriebene zweite sich hauptsächlich nur durch ein einfacheres Getriebe, mit lediglich einer Kegelradstufe, von der ersten unterscheidet, genügt es eine antriebseitige Stütze 10 zu beschreiben.

Die Stütze 10 weist ein Stützenaußenrohr 12 und ein darin längsverschiebbar gelagertes Innenrohr 13 auf. Das Stützenaußenrohr 12 und das Stützeninnenrohr 13 besitzen einen quadratischen Querschnitt. Die Stütze 10 wird mit einer auf ihrer Rückseite über eine am Stützenaußenrohr 12 sitzenden Anschraubplatte 14 am Sattelauflieger befestigt.

Am unteren Ende des Stützeninnenrohres 13 ist ein Fuß 15 zur Abstützung am Boden befestigt. An der Vorderseite der Stütze 10 befindet sich eine wegschwenkbare Handkurbel 16 für den manuellen Antrieb.

Die Stütze 10 weist eine Spindel 17 mit einer Mutter 18 auf. Auf der Schulter der Spindel 17 sitzt eine Scheibe auf der sich ein Axiallager 19 befindet, das sich an einer Lagerplatte 20 abstützt.

Die Lagerplatte 20 ist in das Stützenaußenrohr 12 eingeschweißt und besitzt zur Radiallagerung der Spindel 17 eine durchgehende Lagerbohrung 20a. Über der Lagerplatte 20 befindet sich auf einem Zapfen der Spindel 17 ein mit diesem verstiftetes Kegelrad 21.

Im Zentrum der Stütze 10 und oberhalb des Kegelrades 21 ist eine Getriebeausgangswelle 22 angeordnet, die in den Rohrwänden des Stützenaußenrohres 12, auf der Vorderseite der Stütze 10 in einer außen geschlossenen Bundbuchse 23 und auf der Rückseite, außen überstehend, in einer Bundbuchse 24 gelagert ist. Auf der Getriebeausgangswelle 22 sitzen abtriebseitig, auf einer Vielkeilverzahnung als Einheit ein durchmesserkleineres Kegelrad 25 und ein Zahnrad 26 und ein Zahnrad 27. Oberhalb der Getriebeausgangswelle 22, parallel zu dieser angeordnet und seitlich verlagert befindet sich ein Motor 28 auf dessen Antriebswelle drehfest ein Ritzel 29 sitzt.

Das Ritzel 29 besitzt vom Motor 28 wegweisend einen Lagerzapfen 29a, mit dem es in einer geschlossenen Bundbuchse 30, die in der Wand des Stützenaußenrohres 12 und in der Anschraubplatte 14 sitzt, gelagert ist und in das Zahnrad 27 eingreift.

Der Motor 28 ist gegen ein Flanschsegment 31 von der Anschraubplatte 14 aus festgeschraubt.

Oberhalb der Getriebeausgangswelle 22, parallel zu dieser angeordnet und seitlich entgegengesetzt vom Motor 28 verlagert befindet sich auch ein durch axiales Verschieben ein-/ausschaltbarer Handantriebsmechanismus der sich durch ein fliegend gelagertes Ritzel 32 und eine separate Lagerung 33 der Handantriebswelle 34 von dem vorbekannten Handantriebsmechanismus, gemäß der Erfindung DE 203 07 381 U1, unterscheidet.

Am oberen Ende des Stützenaußenrohres 12 sitzt eine Verschlusskappe 35, die dessen Querschnitt und einen auf der Vorderseite des Stützenaußenrohres 12 befindlichen Montageausschnitt 36 für den Motor 28 hermetisch verschließt.

### Bezugszeichenliste

- 10: Stütze
- 11: Verbindungswelle
- 12: Stützenaußenrohr
- 13: Stützeninnenrohr
- 14: Anschraubplatte
- 15: Fuß
- 16: Handkurbel
- 17: Spindel
- 18: Mutter
- 19: Axiallager
- 20: Lagerplatte
- 20a: Lagerbohrung
- 21: Kegelrad
- 22: Getriebeausgangswelle
- 23: Bundbuchse
- 24: Bundbuchse
- 25: Kegelrad
- 26: Zahnrad
- 27: Zahnrad
- 28: Motor
- 29: Ritzel
- 29a: Lagerzapfen
- 30: Bundbuchse
- 31: Flanschsegment
- 32: Ritzel
- 33: Lagerung
- 34: Handantriebswelle
- 35: Verschlusskappe
- 36: Montageausschnitt

## Patentansprüche

1. Höhenverstellbare Stütze für Sattelauflieger oder dergleichen mit einem ortsfest angebrachten Stützenaußenrohr, einem darin längsverschiebbar angeordneten Stützeninnenrohr und einer Getriebeausgangswelle (22) auf der ein durchmesserkleineres Kegelrad (25) drehfest sitzt, das zu einer Kegelradgetriebestufe gehört, die den Spindeltrieb zwecks Verschiebung des Stützeninnenrohres antreibt, **dadurch gekennzeichnet, dass** auf der Getriebeausgangswelle (22) außer dem, bekannter Weise, vorhandenen Kegelrad (25) zwei durchmessergroße Zahnräder (26, 27) drehfest angeordnet sind, wobei das erste Zahnrad (26) ausschließlich im Kraftfluss des manuellen Antriebs, der über die Handkurbel (16) initiiert wird liegt und das zweite Zahnrad (27) nur den Kraftfluss der vom Motor (28), der in bekannter Weise innerhalb oder außerhalb der Stütze (10) angeordnet sein kann, bewirkt wird überträgt.

2. Stütze nach Anspruch 1, **dadurch gekennzeichnet, dass** das zweite Zahnrad (27) auf der Vorderseite oder der Rückseite in der Stütze (10) angeordnet ist.

3. Stütze nach Anspruch 1, **dadurch gekennzeichnet, dass** der Motorantrieb in permanentem Eingriff mit dem zweiten Zahnrad (27) ist.

4. Stütze nach Anspruch 1, **dadurch gekennzeichnet, dass** der Motorantrieb durch Umschaltung in oder außer Eingriff mit dem zweiten Zahnrad (27) bringbar ist.

5. Stütze nach Anspruch 1, **dadurch gekennzeichnet, dass** das Ritzel (32) des Handantriebs fliegend gelagert ist.

6. Stütze nach Anspruch 1, **dadurch gekennzeichnet, dass** das vom Motor (28) angetriebene Ritzel (29) oder ein entsprechendes Zahnrad und das zweite Zahnrad (27) eine feinere Verzahnung und eine geringere Zahnbreite als das Ritzel (32) des Handantriebes und das erste Zahnrad (26) aufweisen.

## Claims

1. Height-adjustable support for semitrailers or the like, having a stationary outer support tube, an inner support tube, which is arranged in a longitudinally displaceable manner therein, and a gearbox output shaft (22), on which is seated in a rotationally fixed manner a bevel wheel (25) of relatively small diameter which belongs to a bevel wheel gear stage which drives the spindle drive for the purpose of displacing the inner support tube, **characterized in that**, in addition to the bevel wheel (25), which is known to be present, two large-diameter gearwheels (26, 27) are arranged in a rotationally fixed manner on the gearbox output shaft (22), the first gearwheel (26) being located exclusively within the flux of force of the manual drive, which is initiated via the hand crank (16), and the second gearwheel (27) only transmitting the flux of force which is brought about by the motor (28), which, in a known manner, may be arranged inside or outside the support (10).

2. Support according to Claim 1, **characterized in that** the second gearwheel (27) is arranged in the support (10) on the front side or the rear side.

3. Support according to Claim 1, **characterized in that** the motor drive is in permanent engagement with the second gearwheel (27).

4. Support according to Claim 1, **characterized in that** the motor drive can be engaged with, or disengaged from, the second gearwheel (27) by being switched over.

5. Support according to Claim 1, **characterized in that** the pinion (32) of the manual drive is mounted in a floating manner.

6. Support according to Claim 1, **characterized in that** the pinion (29), which is driven by the motor (28), or a corresponding gearwheel and the second gearwheel (27) have a finer toothing formation and a smaller tooth width than the pinion (32) of the manual drive and the first gearwheel (26).

## Revendications

1. Support réglable en hauteur pour semi-remorques ou similaires, comprenant un tube extérieur de support monté fixement, un tube intérieur de support disposé de manière déplaçable longitudinalement à l'intérieur de celui-ci et un arbre de sortie de transmission (22) sur lequel repose de manière solidaire en rotation une roue conique (25) de relativement petit diamètre, qui appartient à un étage de transmission de la roue conique, qui entraîne l'entraînement par broche aux fins du déplacement du tube intérieur de support, **caractérisé en ce que** sur l'arbre de sortie de transmission (22) sont disposées, en plus de la roue conique (25) présente de manière connue, deux roues dentées (26, 27) de gros diamètre solidaires en rotation, la première roue dentée (26) se trouvant exclusivement dans le flux de forces de l'entraînement manuel, qui est amorcé par la manivelle à main (16), et la deuxième roue dentée (27) ne transmettant que le flux de forces provoqué par le moteur (28) qui peut être disposé de manière connue à l'intérieur ou à l'extérieur du support (10).

2. Support selon la revendication 1, **caractérisé en ce que** la deuxième roue dentée (27) est disposée sur le côté avant ou le côté arrière dans le support (10).

3. Support selon la revendication 1, **caractérisé en ce que** l'entraînement du moteur est en engagement permanent avec la deuxième roue dentée (27).

4. Support selon la revendication 1, **caractérisé en ce que** l'entraînement du moteur peut être amené en ou hors d'engagement avec la deuxième roue dentée (27) par inversion.

5. Support selon la revendication 1, **caractérisé en ce que** le pignon (32) de l'entraînement manuel est monté flottant.

6. Support selon la revendication 1, **caractérisé en ce que** le pignon (29) entraîné par le moteur (28) ou une roue dentée correspondante et la deuxième roue dentée (27) présentent une denture plus fine et une largeur de dent plus faible que le pignon (32) de l'entraînement manuel et de la première roue dentée (26).
